Europäisches Patentamt

European Patent Office

Office européen des brevets

(11) Veröffentlichungsnummer: **0 263 386**
**A2**

(12) **EUROPÄISCHE PATENTANMELDUNG**

(21) Anmeldenummer: 87114101.6

(51) Int. Cl.⁴: **G01T 1/18**

(22) Anmeldetag: 26.09.87

(30) Priorität: 01.10.86 DE 3633326

(43) Veröffentlichungstag der Anmeldung:
13.04.88 Patentblatt 88/15

(84) Benannte Vertragsstaaten:
AT BE CH DE ES FR GB IT LI SE

(71) Anmelder: **Standard Elektrik Lorenz Aktiengesellschaft**
**Lorenzstrasse 10**
**D-7000 Stuttgart 40(DE)**

(72) Erfinder: **Foth, Reinhard**
**Appelhof 13**
**D-5840 Schwerte(DE)**
Erfinder: **Rohmund, Achim**
**Löttringserweg 22**
**D-5990 Altena 8(DE)**

(74) Vertreter: **Pohl, Heribert, Dipl.-Ing et al**
**Standard Elektrik Lorenz AG Patent- und Lizenzwesen Postfach 30 09 29**
**D-7000 Stuttgart 30(DE)**

(54) **Strahlungsmessgerät zur Messung einer ionisierenden Strahlung.**

(57) Ein Strahlungsmeßgerät mit einer Strahlungsdetektoranordnung (2) und einer Meßanordnung (6) und einer daran angeschlossenen Anzeigeanordnung (12) zur Anzeige des in der Meßanordnung (6) gebildeten Meßwertes enthält außerdem eine zweite Meßanordnung (7), deren Ausgang (9) über eine Selektionsanordnung (10) an den Meßwerteingang (11) der Meßanordnung (12) anschließbar ist. Die erste Meßanordnung (6) enthält eine Integrationsanordnung (16), die zur Bildung eines genauen Meßwertes vorgesehen ist. Die zweite Meßanordnung (7), die nur während der Betätigung eines Bedienungselementes (18) an die Anzeigeanordnung (12) angeschlossen ist, enthält eine Momentanwertanordnung (17), die aus den Zählimpulsraten (4) der Strahlungsdetektoranordnung (2) einen Momentanwert bildet, der in der Anzeigeanordnung (12) deutlich als Momentanwert gekennzeichnet angezeigt wird.

## Strahlungsmeßgerät zur Messung einer ionisierenden Strahlung

Die Erfindung betrifft ein Strahlungsmeßgerät gemäß dem Oberbegriff des Anspruchs 1. Ein derartiges Strahlungsmeßgerät ist aus der DE-AS 23 63 732 bekannt und enthält in seinem Hauptmeßzweig eine Dosisleistungsmeßanordnung, an die eine Anzeigeanordnung zur Anzeige der in der Dosisleistungsmeßanordnung ermittelten Meßwerte angeschlossen ist. In der Dosisleistungsmeßanordnung werden aus den Zählimpulsraten, die von der Strahlungsdetektoranordnung des Gerätes unter der Einwirkung der zu messenden ionisierenden Strahlung erzeugt wird, der Wert der der Zählimpulsrate entsprechenden Dosisleistung ermittelt.

An die Meßgenauigkeit eines derartigen Strahlungsmeßgerätes werden hohe Anforderungen gestellt. Deshalb enthält das bekannte Strahlungsmeßgerät einen zweiten Meßzweig mit einer zweiten Meßanordnung zur Bildung eines der Dosisleistung entsprechenden Meßwertes, der einer Warneinrichtung des bekannten Meßgerätes zugeführt wird. Überschreitet dieser im zweiten Meßzweig . erstellte Meßwert einen vorgegebenen Schwellwert, oberhalb dem die Meßgenauigkeit des Strahlungsmeßgerätes die vorgegebenen Anforderungen nicht mehr erfüllt, erzeugt die Warneinrichtung ein Warnsignal, das anzeigt, daß der in der Anzeigeanordnung angezeigte Dosisleistungsmeßwert nicht mehr die geforderte Genauigkeit aufweist.

Zur Erfüllung dieser hohen Anforderungen an die Meßgenauigkeit von Strahlungsmeßgeräten, deren angezeigter Meßwert bei einer gemessenen Dosisleistung von über 2 mR/h nicht mehr als ± 5% von der tatsächlichen Dosisleistung abweichen darf und bei einem angezeigten Meßwert von unter 2 mR/h nicht mehr als ± 15% vom tatsächlichen Wert der Dosisleistung abweichen darf, ist insbesondere bei kleinen Werten der Dosisleistung eine sehr hohe Integrationszeit bis über 100 s für die Messung der Impulsraten erforderlich.

Durch diese lange Integrationszeit entsteht eine beträchtliche zeitliche Verzögerung zwischen dem Auftreten der gemessenen Dosisleistung einer Strahlung am Meßort und der Anzeige des tatsächlicen Wertes dieser Dosisleistung. Es ist in diesem Fall nicht möglich, mit einem Strahlungsmeßgerät der eingangs angegebenen Art eine Strahlungsquelle mit vernünftigem zeitlichem Aufwand aufzuspüren. Zum Aufspüren dieser Strahlungsquelle muß das Strahlungsmeßgerät im Feld der ionisierenden Strahlung der Strahlungsquelle bewegt werden, um das Strahlungsmaximum, den Ort der Strahlungsquelle zu ermitteln. Das Strahlungsmeßgerät zeigt jedoch das Maximum im Strahlungsfeld zeitlich wesentlich verzögert an, so daß beim Suchvorgang der Ort, an dem das Strahlungsmeßgerät das Maximum des Strahlungsfeldes anzeigt, weit vom Ort der Strahlungsquelle entfernt sein kann.

Der Erfindung liegt daher die Aufgabe zugrunde, ein Strahlungsmeßgerät der im Oberbegriff des Anspruchs 1 angegebenen Art derart auszubilden, daß das Strahlungsmeßgerät auch zum Aufspüren einer Strahlungsquelle geeignet ist. Diese Aufgabe wird nach der Erfindung durch die im kennzeichnenden Teil des Anspruches 1 angegebenen Merkmale gelöst.

Ein nach der Erfindung ausgebildetes Strahlunsmeßgerät kann in einfachster Weise zum Aufspüren einer Strahlungsquelle verwendet werden. Der Benutzer eines derartigen Strahlungsmeßgerätes ist genötigt, während des Suchbetriebes ein diesbezügliches Bedienungselement zu betätigen, so daß er durch diese Betätigung stets darauf hingewiesen ist, daß er das Strahlungsmeßgerät im Suchbetriebszustand hält. Zustäzlich wird dieser Suchbetriebszustand für den Benutzer deutlich erkennbar in der Anzeigeanordnung des Strahlungsmeßgerätes angezeigt. Durch die Momentanwertanzeige ist der Benutzer des Strahlungsmeßgerätes unmittelbar über den Zutand des Strahlungsfeldes der ionisierenden Strahlung am Meßort informiert. Gleichzeitig jedoch wird die Integrationsbildung für die Zählimpulsraten während des Suchbetriebszustandes des Strahlungsmeßgerätes fortgeführt, so daß am Ende des Suchbetriebszustandes der Meßwert für die Dosisleistung ungehindert vom Suchbetriebszustand des Strahlungsmeßgerätes zur Anzeige bereitsteht.

Die Unteransprüche kennzeichen forteilhafte Ausgestaltungen der Erfindung.

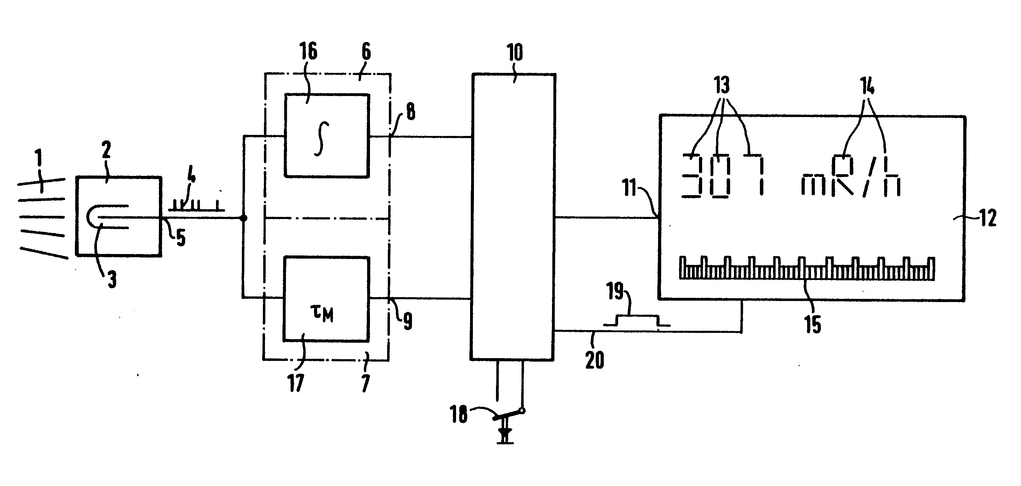

Die Erfindung wird nachfolgend anhand eines vorteilhaften Ausführungsbeispiels näher erläutert. In der zugehörigen Zeichnung stellt die einzige Figur ein Blockschaltbild eines Strahlungsmeßgerätes zur Meßung einer ionisierenden Strahlung 1 dar. Zur Messung der Dosisleistung dieser Strahlung 1 enthält das Strahlungsmeßgerät eine Strahlungsdetektoranordnung 2 mit einem Strahlungsdetektor 3, der unter der Einwirkung der ionisierenden Strahlung 1 an seinem Ausgang 5 eine Zählimpulsrate 4 erzeugt. An den Ausgang 5 der Strahlungsdetektoranordnung 2 sind zwei Meßanordnungen 6 und 7 angeschlossen, deren Ausgänge 8 und 9 über eine Selektionsanordnung 10 mit dem Meßwerteingang 11 einer Anzeigeanordnung 12 verbindbar sind. Die Anzeigeanordnung enthält Anzeigeelemente 13 zur zifferförmigen Anzeige des Zahlenwertes des Meßwertes und Anzeigeelemente 14 zur entsprechenden Anzeige der Meßeinheit dieses Meßwertes sowie eine Skala bildende Anzeigeelemente 15 zur Analoganzeige des mit den Zifferanzeigeelementen 13 dargestellten Zahlenwertes des Meßwertes der gemesenen ionisierenden Strahlung 1.

Im Meßbetriebszustand des Strahlungsmeßgerätes ist der Meßwerteingang 11 der Anzeigeanordnung 12 über die Selektionsanordnung 10 mit dem Ausgang 8 der Meßanordnung 6 verbunden. Diese Meßanordnung 6 enthält eine Integrationsanordnung 16, in der die Zählimpulsraten 4 aus der Strahlungsdetektoranordnung 2 einer derartigen Integration unterworfen werden, daß damit die geforderte Genauigkeit des in der ersten Meßanordnung 6 gebildeten Meßwertes erreicht wird. Die zweite Meßanordnung 7 enthält eine Momentanwertanordnung 17 mit einer sehr kurzen Integrationszeit $\tau_M$ für die Zählimpulsraten 4, die kleiner ist als die Wiederholzeit $t_A$ der Anzeige des Zahlenwertes mit den ziffermäßigen Anzeigeelementen 13 und kleiner als die Anzeigezeitkonstante $\tau_A$ der mit den Anzeigeelementen 15 gebildeten Skalenanzeige. Der von der Momentanwertanordnung 17 gebildete Momentanwert gelangt dann an den Meßwerteingang 11 der Anzeigeanordnung 12, wenn eine selbstrückstellbare Taste 18 der Selektionsanordnung 10 betätigt ist und den Ausgang 9 der zweiten Meßanordnung 7 mit dem Meßwerteingang 11 der Anzeigeanordnung 12 verbindet. Gleichzeitig erhält während der Betätigung der Taste 18 die Anzeigeanordnung 12 über eine Steuerleitung 19 ein Steuersignal 20, das im dargestellten Ausführungsbeispiel die zahlenmäßige Anzeige des Meßwertes mittels der Anzeigeelemente 13 unterdrückt und damit dem Benutzer des Meßgerätes deutlich angibt, daß der mit den Anzeigeelementen 15 skalenmäßig angezeigte Zahlenwert der mit der Meßanordnung 7 gemessene Momentanwert einer auf den Strahlungsdetektor 3 einwirkenden ionisierenden Strahlung 1 ist und daß dieser angezeigte Momentanwert nicht die für eine Messung erforderliche Genauigkeit aufweist.

Die Meßanordnungen 6 und 7, die Selektionsanordnung 10 und die nicht näher dargestellten Aufbereitungsanordnungen der Anzeigeanordnung 12 sind in einer besonderen Ausgestaltung des dargestellten Strahlungsmeßgerätes Bestandteile eines Mikroprozessors.

**Ansprüche**

1. Strahlungsmeßgerät zur Messung einer ionisierenden Strahlung
-mit einer Strahlungsdetektoranordnung, die unter der Einwirkung der ionisierenden Strahlung eine der Dosisleistung der Strahlung am Meßort entsprechende Impulsrate erzeugt,
-mit zwei Meßanordnungen zur Bildung eines der Dosisleistung entsprechenden Meßwertes, von denen die eine Meßanordnung eine eine geforderte Meßgenauigkeit des Meßwertes erzeugende Integrationsanordnung enthält,
-und mit einer Anzeigeanordnung, die den von der ersten Meßanordnung erzeugten Meßwert anzeigt, dadurch gekennzeichnet,
-daß die zweite Meßanordnung (7) eine Momentanwertanordnung (17) enthält, deren Integrationszeit ($\tau_M$) oder Integrationszeitkonstante gleich oder kleiner der Wiederholzeit ($t_A$) oder der Zeitkonstante ($\tau_A$) der Anzeige eines Meßwertes in der Anzeigeanordnung (12) ist,
-und daß der Anzeigeanordnung eine Selektionsanordnung (10) vorgeschaltet ist, die während der Betätigung eines Bedienungselementes (18) den Meßwerteingang (11) der Anzeigeanordnung (12) vom Ausgang (8) der ersten Meßanordnung (6) trennt und an den Ausgang (9) der zweiten Meßanordnung (7) für den Momentanwert legt und durch ein Steuersignal (20) die Anzeigeelemente (13, 14, 15) der Anzeigeanordnung deutlich unterscheidbar von der Anzeige des Meßwertes zur Anzeige des Momentanwertes umschaltet.

2. Strahlungsmeßgerät nach Anspruch 1, dadurch gekennzeichnet, daß das Bedienungselement (18) zur Umschaltung der Selektionsanordnung (10) eine zusätzliche selbstrückstellbare Taste ist.

3. Strahlungsmeßgerät nach Anspruch 1 oder 2, dadurch gekennzeichnet,
-daß die Anzeigeanordnung (12) die Maßzahl des Meßwertes in Ziffern anzeigende Anzeigeelemente (13) und zusätzlich diese Maßzahl auf einer Skala anzeigende Anzeigeelemente (15) enthält,
-und daß zur Anzeige des Momentanwertes die die Maßzahl in Ziffern anzeigende Anzeigeelemente (13) ausgeschaltet sind.

R. Foth 1-1